# DEMANDE DE BREVET EUROPEEN

(11) **EP 3 736 609 A1**
(43) Date de publication de la demande: **11.11.2020**
(21) Numéro de dépôt: 20173274.0
(22) Date de dépôt: 06.05.2020
(51) Int. Cl.: G01T 1/20

(54) **DISPOSITIF D'ANALYSE DE RAYONNEMENT BÊTA ET PROCÉDÉ D'ANALYSE ASSOCIÉ**

(30) Priorité: 07.05.2019 FR 1904786
(71) Demandeur: Commissariat à l'énergie atomique et aux énergies alternatives, 75015 Paris (FR)
(72) Inventeur: SARI, Adrien, 94220 CHARENTON-LE-PONT (FR); DUFOUR, Nicolas, 91140 VILLEBON-SUR-YVETTE (FR)
(74) Mandataire: Brevalex

(57) **Abrégé**

L'invention concerne un dispositif (2) d'analyse de rayonnement β comprenant un étage de détection (6) comportant une pluralité de fibres de détection (10) et un organe de détection (14),
chaque fibre de détection (10) comprenant un cœur réalisé dans un matériau comprenant au moins un fluorophore apte à générer des photons lors de l'absorption par le cœur d'un rayonnement β (5) incident, et une gaine réalisée dans un matériau ne comportant pas de fluorophore apte à générer de photons en cas d'absorption par la gaine dudit rayonnement,
au moins deux fibres de détection (10) présentant des épaisseurs de gaine différentes et/ou des diamètres de cœur différents,
l'organe de détection (14) étant configuré pour recevoir, depuis chaque fibre de détection (10), tout ou partie des photons générés au sein de son cœur, et pour produire, pour chaque fibre de détection (10), un signal de détection représentatif de la détection desdits photons.

## Description

### DOMAINE TECHNIQUE

La présente invention concerne un dispositif d'analyse β. L'invention concerne également un procédé d'analyse d'un rayonnement issu d'une source, mettant en œuvre un tel dispositif. Un tel dispositif d'analyse constitue un spectromètre β, de sorte que le procédé d'analyse est un procédé de spectrométrie β.

L'invention s'applique au domaine de la mesure nucléaire, notamment pour l'assainissement et le démantèlement d'installations nucléaires.

### ÉTAT DE LA TECHNIQUE ANTÉRIEURE

Il est connu, notamment dans le domaine de l'assainissement et du démantèlement d'installations nucléaires, de procéder à des mesures impliquant des rayonnements β.

Le document US 8,384,034 B2 décrit, par exemple, un dispositif de détection de rayonnements β apte à déterminer des trajectoires de particules β incidentes.

Toutefois, un tel dispositif de détection ne donne pas entière satisfaction.

En effet, un tel dispositif de détection comporte un scintillateur à base d'iodure de sodium qui, outre sa capacité à capter des particules β, est également apte à détecter les photons engendrés par son interaction avec des particules γ. Une telle interaction avec des particules γ constitue une source additionnelle de bruit, de sorte que le signal de détection du rayonnement β présente un rapport signal sur bruit insatisfaisant.

En outre, la réponse des scintillateurs à base d'iodure de sodium dépend fortement de la température. Il en résulte que l'interprétation des mesures effectuées dans un environnement non contrôlé (mesures en extérieur, par exemple) au moyen d'un tel système de détection est susceptible d'être entachée d'erreur.

Un but de l'invention est donc de proposer un dispositif de détection de rayonnement β qui soit plus performant que les dispositifs de détection de l'état de la technique.

### EXPOSÉ DE L'INVENTION

A cet effet, l'invention a pour objet un dispositif de détection du type précité, comprenant un étage de détection comportant une pluralité de fibres scintillantes formant chacune une fibre de détection, et un organe de détection,
chaque fibre de détection comprenant un cœur et une gaine agencée autour du cœur, le cœur étant réalisé dans un matériau comprenant au moins un fluorophore apte à générer des photons lors de l'absorption par le cœur d'un rayonnement β incident issu d'une source, la gaine étant réalisée dans un matériau ne comportant pas de fluorophore apte à générer de photons en cas d'absorption par la gaine du rayonnement β incident,
chaque fibre de détection étant configurée pour transporter, vers au moins une de ses extrémités, tout ou partie des photons générés au sein de son cœur,
au moins deux fibres de détection présentant des épaisseurs de gaines différentes et/ou des diamètres de cœur différents,
l'organe de détection étant raccordé à une extrémité de chaque fibre de détection pour recevoir tout ou partie des photons transportés par la fibre de détection, et étant configuré pour générer, pour chaque fibre de détection, un signal de détection représentatif de la détection des photons reçus depuis la fibre de détection.

En effet, les particules β sont susceptibles de déposer tout ou partie de leur énergie dans la gaine avant de parvenir au cœur. Il en résulte que la gaine se comporte comme un filtre passe-haut en énergie à l'égard des particules β : les particules β dont l'énergie est inférieure à un certain seuil, dépendant de l'épaisseur de la gaine, ne parvenant pas au cœur.

Par « épaisseur de gaine » d'une fibre de détection, il est entendu, au sens de la présente invention, la différence entre son rayon et le rayon de son cœur.

La réponse des fibres de détection varie donc en fonction de leur épaisseur de gaine, ce qui est susceptible d'être exploité pour l'identification des radionucléides présents dans la source.

En outre, des diamètres de cœur différents conduisent également à des réponses différentes des fibres de détection, ce qui est susceptible d'être exploité pour l'identification des radionucléides présents dans la source.

Il résulte de ce qui précède que le recours à des fibres de détection présentant des diamètres de cœur et/ou des épaisseurs de gaine différents entraîne, pour une même source, des réponses différentes des fibres de détection. De telles différences sont susceptibles d'être exploitées pour identifier les radionucléides présents dans la source.

Le recours à des fibres scintillantes pour la détection de particules β est également avantageux dans la mesure où, du fait de leur faible dimension transverse, les cœurs des fibres de détection sont bien moins susceptibles d'interagir avec des particules γ ou autres, tandis que, même avec de telles dimensions transverses, l'interaction des cœurs avec des particules β conduit à des niveaux de signal satisfaisants. Par conséquent, les photons issus des fibres de détection et parvenant à l'organe de détection sont en très grande partie des photons issus d'une interaction du cœur de la fibre de détection correspondante avec une ou des particule(s) β, ce qui conduit, en sortie de l'organe de détection, à un rapport signal sur bruit meilleur que celui des dispositifs de l'état de la technique.

En outre, le recours à des fibres de détection présentant des épaisseurs de gaines différentes et/ou des diamètres de cœur différents conduit à une résolution en énergie meilleure que celle obtenue avec une seule fibre de détection, ou une pluralité de fibres de détection toutes identiques. Une telle amélioration de la résolution en énergie facilite l'identification des radionucléides présents dans la source.

Suivant d'autres aspects avantageux de l'invention, le dispositif de détection comporte une ou plusieurs des caractéristiques suivantes, prise(s) isolément ou suivant toutes les combinaisons techniquement possibles :
- le dispositif d'analyse comporte, en outre, un calculateur connecté en sortie de l'étage de détection pour recevoir chaque signal de détection généré, le calculateur étant configuré pour stocker des données de calibration relatives à une réponse de l'étage de détection à un rayonnement β incident, le calculateur étant, en outre, configuré pour déterminer, à partir des données de calibration et de tout ou partie des signaux de détection reçus, des informations relatives à la source ;
- le cœur de chaque fibre de détection est réalisé dans un matériau organique ;
- le cœur de chaque fibre de détection présente un diamètre inférieur ou égal à 1 mm, de préférence inférieur ou égal à 500 µm, par exemple inférieur ou égal à 300 µm ;
- la gaine de chaque fibre de détection présente une épaisseur supérieure ou égale à 5 µm, de préférence supérieure ou égale à 7,5 µm ;
- la pluralité de fibres de détection est solidaire d'une surface d'un support souple, chaque fibre de détection étant au contact de la surface du support, chaque fibre de détection étant déformable ;
- l'organe de détection comprend, pour chaque fibre de détection deux photodétecteurs, chacun connecté à une extrémité respective de la fibre de détection, le calculateur étant, en outre, configuré pour détecter une position, le long d'une fibre de détection donnée, d'une interaction d'une particule β avec le cœur de la fibre de détection par la mise en œuvre d'une méthode de calcul de temps de vol à partir du signal de détection délivré par chacun des deux photodétecteurs correspondants.

En outre, l'invention a pour objet un procédé d'analyse d'un rayonnement issu d'une source, le procédé comprenant les étapes :
- exposition des fibres de détection du dispositif de détection tel que défini ci-dessus au rayonnement issu de la source ;
- détermination d'informations relatives à la source à partir des données de calibration préenregistrées, relatives à une réponse de l'étage de détection à un rayonnement β incident, et de tout ou partie des signaux de détection délivrés par l'étage de détection lors de l'étape d'exposition.

Suivant un autre aspect avantageux de l'invention, le procédé comporte la caractéristique suivante : la détermination est réalisée au moyen d'un algorithme espérance-maximisation, MLEM.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- la figure 1 est une représentation schématique d'un dispositif d'analyse de rayonnement β selon l'invention ;
- la figure 2 est une vue schématique en section, selon un plan orthogonal à leur axe longitudinal, de fibres de détection du dispositif d'analyse de la figure 1 ;
- la figure 3 est un graphe représentant un spectre de détection associé à une première fibre de détection du dispositif d'analyse de la figure 1 ;
- la figure 4 est un graphe représentant un spectre de détection associé à une deuxième fibre de détection du dispositif d'analyse de la figure 1, distincte de la fibre de détection de la figure 3 ;
- la figure 5 est un graphe représentant un spectre de détection associé à une troisième fibre de détection du dispositif d'analyse de la figure 1, distincte des fibres de détection de chacune des figures 3 et 4 ;
- la figure 6 est un graphe représentant un spectre de détection associé à une quatrième fibre de détection du dispositif d'analyse de la figure 1, distincte des fibres de détection de chacune des figures 3 à 5 ;
- la figure 7 est un graphe représentant le résultat de la soustraction du spectre de la figure 4 au spectre de la figure 3 ;
- la figure 8 est un graphe représentant le résultat de la soustraction du spectre de la figure 6 au spectre de la figure 5 ;
- la figure 9 est un graphe représentant un spectre de synthèse obtenu à partir des graphes des figures 7 et 8 ; et
- la figure 10 est un graphe représentant le spectre d'un signal de détection associé à une fibre de détection du dispositif d'analyse de la figure 1, le rayonnement β étant issu d'une source comprenant une pluralité de radionucléides.

### EXPOSÉ DÉTAILLÉ DE MODES DE RÉALISATION PARTICULIERS

### Structure

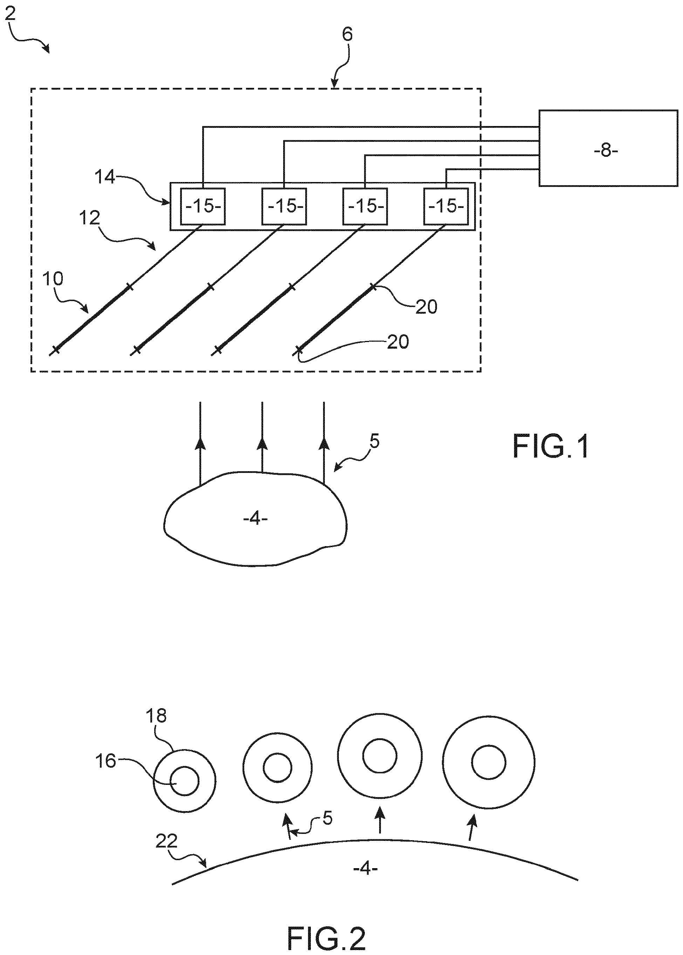

Un dispositif 2 d'analyse de rayonnement β est illustré par la figure 1. Le dispositif d'analyse 2 est configuré pour déterminer des informations relatives à une source 4 de rayonnement 5, notamment de rayonnement β, à partir de l'analyse du rayonnement 5 issu de ladite source 4.

Le dispositif d'analyse 2 comporte un étage de détection 6 et un calculateur 8 connecté en sortie de l'étage de détection 6.

L'étage de détection 6 est configuré pour recevoir le rayonnement 5 issu de la source 4, et pour générer une pluralité de signaux de détection représentatifs d'un rayonnement β présent dans le rayonnement 5.

En outre, le calculateur 8 est configuré pour recevoir les signaux de détection issus de l'étage de détection 6, et pour déterminer des informations relatives à la source 4 à partir de tout ou partie des signaux de détection reçus.

### Etage de détection

L'étage de détection 6 comporte une pluralité de fibres scintillantes 10, dites « fibres de détection », et un organe de détection 14.

L'organe de détection 14 est raccordé à une extrémité de chaque fibre de détection correspondante, notamment au moyen d'une fibre optique de transport 12, par la suite appelée « fibre de transport ».

Chaque fibre de détection 10 est configurée pour générer des photons à l'issue d'une interaction avec des particules β, et pour acheminer tout ou partie des photons générés vers l'une au moins de ses extrémités. En outre, l'organe de détection 14 est configuré pour générer, pour chaque fibre de détection 10, un signal de détection représentatif de tout ou partie des photons reçus en provenance de ladite fibre de détection 10 par le biais de la fibre de transport 12 associée.

Les fibres de détection 10 sont destinées à être agencées pour faire face à la source 4.

Par exemple, les fibres de détection 10 sont agencées à demeure dans un même plan, de préférence parallèlement les unes aux autres.

Selon un autre exemple, les fibres de détection 10 sont solidaires d'une surface d'un support souple (non représenté), chaque fibre de détection étant au contact de la surface du support. Un tel agencement est avantageux, dans la mesure où il autorise de déformer les fibres de détection 10 pour adapter leur géométrie à une face de la source 4 qui ne serait pas plane. Dans ce cas, les fibres de détection 10 sont déformables.

Comme illustré par la figure 2, chaque fibre de détection 10 comprend un cœur 16 et une gaine 18 agencée autour du cœur 16. Plus précisément, le cœur 16 s'étend longitudinalement et présente une section transversale circulaire, tandis que la gaine 18, qui s'étend également longitudinalement, présente une section transversale annulaire, la gaine 18 enveloppant circonférentiellement le cœur 16 en étant au contact de celui-ci. Une telle gaine est parfois désignée par l'expression anglaise « *optical cladding* »*.*

Le cœur 16 est réalisé dans un matériau comprenant au moins un fluorophore apte à générer des photons lors de l'absorption, par le cœur 16, d'un rayonnement β. Dans ce cas, lors d'une interaction d'une particule β avec le cœur 16, la particule β dépose tout ou partie de son énergie dans le cœur 16, ladite énergie déposée excitant lesdits fluorophores qui se désexcitent par émission de photons.

Avantageusement, le matériau dans lequel est réalisé le cœur 16 est un matériau organique, par exemple du polystyrène. Par exemple, les cœurs 16 de l'ensemble des fibres de détection 10 sont réalisés dans le même matériau.

En outre, la gaine 18 étant réalisée dans un matériau ne comportant pas de fluorophore apte à générer de photons en cas d'absorption par la gaine du rayonnement β incident.

Avantageusement, le matériau dans lequel est réalisée la gaine 18 est un matériau organique, par exemple du polyméthacrylate de méthyle. Par exemple, les gaines 18 de l'ensemble des fibres de détection 10 sont réalisées dans le même matériau.

Le cœur 16 et la gaine 18 sont tels que, lors de l'émission de photons dans le cœur 16 à l'issue d'une interaction avec une ou des particule(s) β, lesdits photons sont confinés dans le cœur 16 transportés vers les extrémités 20 de la fibre de détection 10, selon un principe connu de guidage de la lumière.

Au moins deux fibres de détection 10 présentent des épaisseurs de gaine et/ou des diamètres de cœur différents.

Par « diamètre de cœur » d'une fibre de détection 10, il est entendu, au sens de la présente invention, le diamètre de son cœur 16.

Par « épaisseur de gaine » d'une fibre de détection 10, il est entendu, au sens de la présente invention, l'épaisseur de sa gaine 18.

De préférence, chaque fibre de détection 10 présente un diamètre de cœur inférieur ou égal à 1 mm (millimètre), de préférence inférieur ou égal à 500 µm (micromètre), par exemple inférieur ou égal à 300 µm (à l'image de la fibre de détection connue sous l'appellation commerciale BCF-10 et produite par la société Saint-Gobain). Un tel choix est avantageux, car il conduit à une interaction satisfaisante avec les particules β, tout en limitant l'interaction avec les neutrons et les photons (photons γ, notamment).

De préférence encore, chaque fibre de détection 10 présente une épaisseur de gaine supérieure ou égale à une épaisseur prédéterminée. Ceci est avantageux, dans la mesure où la gaine 18, lorsqu'elle présente une épaisseur suffisante, est propre à absorber les particules α émises par la source 4, ce qui améliore le rapport signal sur bruit. Par exemple, l'épaisseur de gaine est supérieure ou égale à 5 µm, en particulier supérieure ou égale à 7,5 µm (à l'image de la fibre de détection connue sous l'appellation commerciale BCF-10 et produite par la société Saint-Gobain).

Une telle épaisseur minimale est avantageuse, dans la mesure où une épaisseur de gaine trop faible risquerait de dégrader la capacité la fibre de détection de détection 10 à transporter des photons vers l'organe de détection 14, et de rendre la gaine 18 perméable aux particules α.

Les fibres de transport 12 sont réalisées dans des matériaux qui ne sont pas aptes à générer de photons en cas d'interaction avec des particules β, ou à atténuer significativement un flux de photons qui sont simultanément des photons que l'organe de détection 14 est susceptible de détecter, et qui présentent une longueur d'onde appartenant à une plage d'émission des fluorophores présents dans le cœur 16 de la fibre de détection 10 correspondante.

Comme énoncé précédemment, l'organe de détection 14 est connecté à une extrémité de chaque fibre de détection 10, au moyen de chacune des fibres de transport 12 agencées entre la fibre de détection 10 respective et l'organe de détection 14.

L'organe de détection 14 est configuré pour détecter des photons dont la longueur d'onde appartient à au moins une partie de la plage d'émission des fluorophores présents dans le cœur 16 de la fibre de détection 10 correspondante.

L'organe de détection 14 est, en outre, configuré pour générer, pour chaque fibre de détection 10, un signal électrique représentatif d'une telle détection, dit « signal de détection ». Dans ce cas, pour chaque fibre de détection 10, le signal de détection correspondant comporte une succession d'impulsions, chacune représentative de l'interaction d'une particule β avec ladite fibre de détection 10. Plus précisément, pour un signal de détection donné, chaque impulsion est représentative de l'énergie déposée par la particule β dans le cœur 16 de la fibre de détection 10 correspondante durant son interaction avec celui-ci. Par exemple, ladite énergie déposée est proportionnelle à l'intégrale, au cours du temps, de l'impulsion. Le facteur de proportionnalité correspondant est un réel prédéterminé, notamment, fonction de l'organe de détection 14, qui est stocké dans le calculateur 8.

Par exemple, l'organe de détection 14 comporte une pluralité de photodétecteurs 15, chacun associé à une fibre de détection 10 correspondante. Dans ce cas, chaque photodétecteur 15 est raccordé à une extrémité de la fibre de détection correspondante, notamment au moyen de la fibre de transport 12 associée.

Le photodétecteur 15 est, par exemple, un photomultiplicateur (tel qu'un photomultiplicateur à tube, ou PMT, de l'anglais « *Tube Photomultiplier* », ou encore un photomultiplicateur en silicium, ou SiPM, de l'anglais « *Silicon Photomultiplier* »), une photodiode, etc.

### Calculateur

Comme indiqué précédemment, le calculateur 8 est configuré pour déterminer des informations relatives à la source 4, par exemple la nature de radionucléides présents dans la source 4.

Pour ce faire, le calculateur 8 est configuré pour stocker des données de calibration relatives à une réponse de l'étage de détection 6 à un rayonnement β incident.

Par exemple, de telles données de calibration sont un spectre du signal de détection délivré pour l'organe de détection 14 pour chaque fibre de détection 10, lors d'une exposition de la fibre de détection 10 à un flux monoénergétique de particules β. Dans ce cas, les données de calibration sont stockées pour plusieurs énergies différentes du flux monoénergétique de particules β.

Par « spectre » du signal de détection, il est entendu, au sens de la présente invention, une distribution des impulsions du signal de détection en fonction de l'énergie calculée des particules β qui en sont à l'origine.

Selon un autre exemple, de telles données sont une réponse de l'organe de détection 14 pour chaque fibre de détection 10 au flux de particules β issu d'un radionucléide quelconque donné. Dans ce cas, les données de calibration sont stockées pour plusieurs radionucléides différents. En outre, dans ce cas, et contrairement à l'exemple précédent, le spectre d'émission est un spectre continu, et non un spectre monoénergétique.

En outre, de telles données de calibration comprennent également des instructions de calcul pour l'obtention, à partir de tout ou partie des signaux de détection et des réponses stockées, de données relatives à la source 4.

Avantageusement, les données de calibration comprennent, en outre, pour chaque fibre de détection 10, des données de correction pour compenser un décalage en énergie entre les énergies déterminées à partir des impulsions du signal de détection correspondant et l'énergie réelle des particules à l'origine desdites impulsions, ledit décalage étant dû à un dépôt partiel d'énergie, par lesdites particules, dans la gaine 18.

### Fonctionnement

Le fonctionnement du dispositif d'analyse 2 va d'abord être décrit en référence à un premier exemple et un deuxième exemple.

### Premier exemple

Les résultats relatifs à ce premier exemple ont été obtenus par simulation au moyen d'un code de calcul appelé « MCNP6 ». Un tel code étant reconnu pour sa fiabilité, une telle simulation ne remet pas en cause le fonctionnement réel de l'invention.

L'étage de détection 6 comporte quatre fibres de détection 10 deux à deux distinctes.

La première fibre de détection 10 présente un diamètre de 300 µm et un diamètre de cœur de 250 µm, c'est-à-dire une épaisseur de gaine de 25 µm.

La deuxième fibre de détection 10 présente un diamètre de 350 µm et un diamètre de cœur de 250 µm, c'est-à-dire une épaisseur de gaine de 50 µm.

La troisième fibre de détection 10 présente un diamètre de 750 µm et un diamètre de cœur de 500 µm, c'est-à-dire une épaisseur de gaine de 125 µm.

La quatrième fibre de détection 10 présente un diamètre de 1050 µm et un diamètre de cœur de 500 µm, c'est-à-dire une épaisseur de gaine de 275 µm.

Dans cet exemple, la source 4 est une source apte à émettre des particules β présentant une énergie de 100 keV (kiloélectronvolt), 200 keV, 250 keV, 500 keV, ou 1000 keV. En d'autres termes, la distribution en énergie des particules β délivrées par la source 4 présente la forme d'un peigne comportant cinq pics, chacun situé à l'une des énergies mentionnées ci-dessus.

L'épaisseur de la gaine des deuxième, troisième et quatrième fibres de détection est telle que les particules β présentant une énergie de 100 keV (ou moins) déposent l'intégralité de leur énergie dans la gaine 18, de sorte qu'elles ne parviennent pas au cœur 16 desdites troisième et quatrième fibres de détection. En revanche, l'épaisseur de la gaine de la première fibre de détection est telle que les particules β présentant une énergie de 100 keV sont susceptibles de parvenir au cœur 16 desdites première et deuxième fibres de détection.

Les fibres de détection 10 sont placées de façon à faire face à la source 4, par exemple à 1 cm (centimètre) d'une surface 22 de la source 4, de sorte que chaque fibre de détection 10 reçoive des particules β en provenance de la source 4.

Pour chaque fibre de détection 10, l'interaction de chaque particule β avec le cœur 16, lorsqu'elle parvient à l'atteindre, se traduit par l'émission de photons, qui sont détectés par l'organe de détection 14. Ceci entraîne l'apparition, dans le signal de détection associé à ladite fibre de détection 10 et délivré par l'organe de détection 14, d'une impulsion représentative de ladite interaction.

Puis, pour chaque fibre de détection 10, le calculateur 8 calcule le spectre du signal de détection correspondant.

### • Figure 3

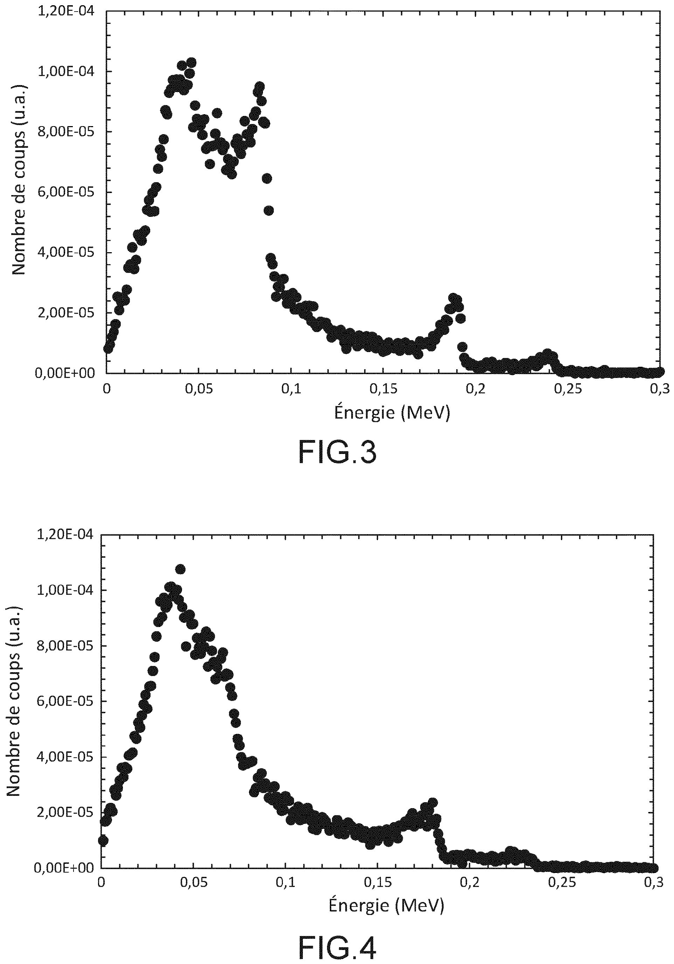

Le spectre du signal de détection associé à la première fibre de détection est illustré par la figure 3.

Comme cela ressort de la figure 3, le spectre du signal de détection associé à la première fibre de détection présente quatre pics, à savoir :
- un pic à 40 keV, dû aux particules β d'énergie 500 keV ou 1000 keV, qui ne déposent que partiellement leur énergie dans le cœur 16 avant de s'en échapper;
- un pic à 80 keV, dû à l'absorption totale des particules β d'énergie 100 keV par le cœur 16, après leur passage dans la gaine 18 ;
- un pic à 170 keV, dû à l'absorption totale des particules β d'énergie 200 keV par le cœur 16, après leur passage dans la gaine 18 ; et
- un pic à 240 keV, dû à l'absorption totale des particules β d'énergie 250 keV par le cœur 16, après leur passage dans la gaine 18.

### • Figure 4

Le spectre du signal de détection associé à la deuxième fibre de détection est illustré par la figure 4. Un tel spectre présente :
- un pic à 40 keV, dû aux particules β d'énergie 500 keV ou 1000 keV, similaire à celui de la figure 3 ; et
- un pic à 180 keV, dû à l'absorption totale des particules β d'énergie 200 keV par le cœur 16, après leur passage dans la gaine 18, et dont la forme est différente du pic correspondant dans le spectre de la figure 3. Cet élargissement du pic traduit le fait que le dépôt d'énergie partiel des particules β dans la fibre de détection 10 présente une plage de variation plus importante dans le cas d'une fibre de détection 10 à gaine épaisse, à l'instar de celle conduisant à la figure 4. Autrement dit, l'angle d'incidence avec lequel une particule β parvient à la fibre de détection 10 a un effet plus important sur la distance parcourue par ladite particule β dans la gaine 18 d'une fibre de détection 10 de gaine 18 plus épaisse par rapport au cas d'une fibre de détection 10 ayant une gaine 18 plus mince.

Le pic associé aux particules β d'énergie 250 keV présente une très faible amplitude, l'action passe-haut de la gaine de la fibre de détection étant significatif pour cette énergie de particule β et pour cette épaisseur de gaine. En outre, le pic associé aux particules β d'énergie 100 keV est inexistant, du fait de l'action passe-haut de la gaine de la deuxième fibre de détection.

### • Figure 5

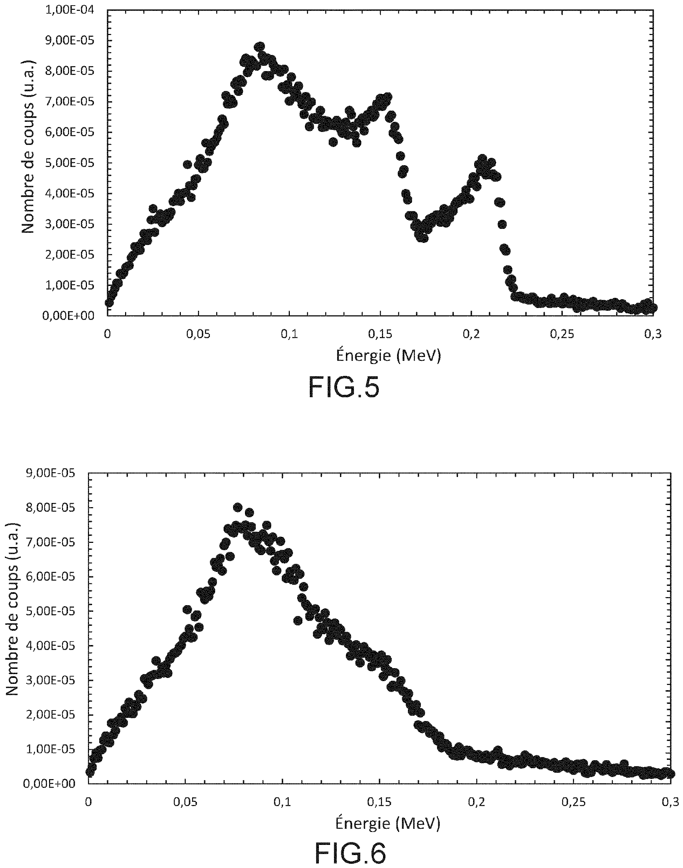

Le spectre du signal de détection associé à la troisième fibre de détection est illustré par la figure 5. Un tel spectre présente :
- un pic à 85 keV, dû aux particules β d'énergie 500 keV ou 1000 keV, qui ne déposent que partiellement leur énergie dans le cœur 16 avant de s'en échapper ;
- un pic à 150 keV, dû à l'absorption totale des particules β d'énergie 200 keV par le cœur 16, après leur passage dans la gaine 18 ; et
- un pic à 200 keV, dû à l'absorption totale des particules β d'énergie 250 keV par le cœur 16, après leur passage dans la gaine 18.

Le pic associé aux particules β d'énergie 100 keV est inexistant, du fait de l'action passe-haut de la gaine de la troisième fibre de détection.

### • Figure 6

Le spectre du signal de détection associé à la quatrième fibre de détection est illustré par la figure 6. Un tel spectre présente uniquement un pic à 85 keV, dû aux particules β d'énergie 500 keV ou 1000 keV, qui ne déposent que partiellement leur énergie dans le cœur 16 avant de s'en échapper.

Les pics associés aux particules β d'énergie 100 keV, 200 keV et 250 keV respectivement sont absents, du fait de l'action passe-haut de la gaine de la quatrième fibre de détection, qui absorbe lesdites particules.

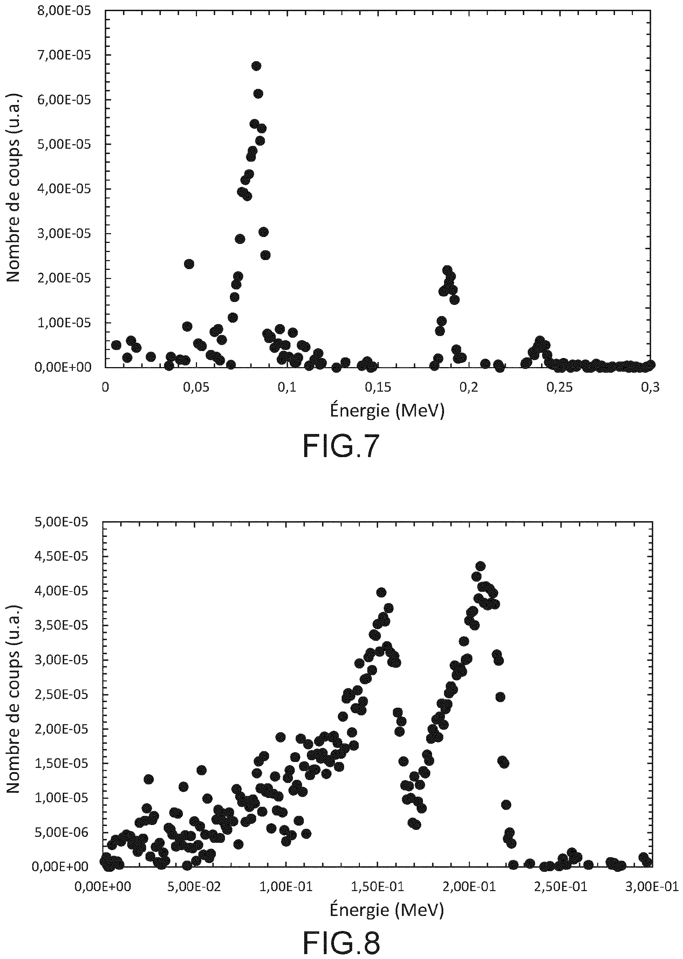

Puis, le calculateur 8 soustrait le spectre associé à la deuxième fibre de détection du spectre associé à la première fibre de détection. Le résultat obtenu est illustré par la figure 7, où le pic associé aux particules β d'énergie 100 keV se détache distinctement, bien que cela ne fût pas le cas dans le spectre de la figure 3.

En outre, le calculateur 8 soustrait le spectre associé à la quatrième fibre de détection du spectre associé à la troisième fibre de détection. Le résultat obtenu est illustré par la figure 8, où les pics associés aux particules β d'énergie 200 keV et 250 keV respectivement se détachent distinctement, bien que cela ne fût pas le cas dans le spectre de la figure 8.

D'une façon plus générale, le calculateur 8 soustrait, de préférence, entre eux les spectres obtenus à partir de fibres présentant des diamètres de cœur égaux, mais des épaisseurs de gaine différentes.

Puis, le calculateur 8 construit un spectre, dit « de synthèse », à partir du résultat des soustractions, par exemple par addition des résultats des soustractions.

En variante, à chaque sous-plage prédéterminée parmi une plage d'énergie de travail du dispositif d'analyse 2, deux fibres de détection 10 prédéterminées sont associées. Dans ce cas, pour chaque sous-plage prédéterminée, la partie correspondante du spectre de synthèse est le résultat de la soustraction des spectres associés aux deux fibres de détection 10 prédéterminées correspondantes.

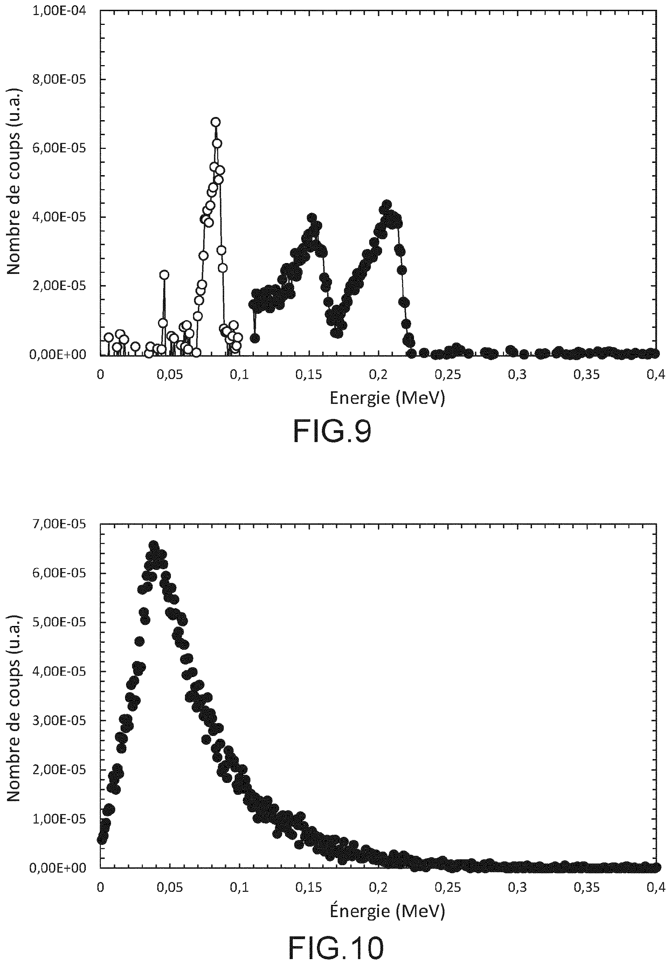

Dans le cadre du présent exemple, le spectre de synthèse construit par le calculateur 8 est illustré par la figure 9. Comme cela apparaît sur la figure, sur la plage [0 ; 100 keV], le spectre de synthèse est égal au spectre de la figure 7 ; en outre, sur la plage]100 keV ; 400 keV], le spectre de synthèse est égal au spectre de la figure 8.

Puis, le calculateur 8 détermine la position des pics du spectre de synthèse, les positions déterminées constituant des informations relatives à la source 4.

Dans les spectres décrits ci-dessus, le décalage de la position des pics, par rapport à leur position attendue aux énergies 100 keV, 200 keV et 250 keV respectivement, est dû à la gaine 18, qui absorbe une partie de l'énergie des particules β incidentes.

De préférence, la soustraction est précédée ou suivie d'un recalage, par le calculateur 8, des pics de chaque signal de détection en fonction des données de correction, lorsqu'elles sont incluses dans les données de calibration.

Il ressort, en outre, de la figure 9, que les pics n'ont pas été recalés pour parvenir au spectre de synthèse.

### Deuxième exemple

Les résultats relatifs à ce deuxième exemple ont été obtenus par simulation au moyen d'un code de calcul nommé MCNP6. Un tel code étant reconnu pour sa fiabilité, une telle simulation ne remet pas en cause le fonctionnement réel de l'invention.

L'étage de détection 6 est identique à celui du premier exemple.

En outre, dans cet exemple, la source 4 est une source comprenant, à parts égales, du carbone 14¹⁴C, du strontium 90 ⁹⁰Sr, de l'yttrium 90⁹⁰Y et du bismuth 210 ²¹⁰Bi.

Comme précédemment, les fibres de détection 10 sont agencées pour faire face à la surface 22 de la source 4, par exemple à 1 cm (centimètre) de la surface 22, de sorte que chaque fibre de détection 10 reçoive des particules β en provenance de la source 4.

Pour chaque fibre de détection 10, l'interaction de chaque particule β avec le cœur 16, lorsqu'elle parvient à l'atteindre, se traduit par l'émission de photons, qui sont détectés par l'organe de détection 14. Ceci entraîne l'apparition, dans le signal de détection associé à ladite fibre de détection 10 et délivré par l'organe de détection 14, d'une impulsion représentative de ladite interaction.

Puis, pour chaque fibre de détection 10, le calculateur 8 calcule le spectre du signal de détection correspondant.

Par exemple, le spectre du signal de détection associé à la première fibre de détection est illustré par la figure 10. Il ressort de cette figure 10 qu'un tel spectre ne présente pas de pic marqué. Ceci provient du fait que le spectre calculé par le calculateur 8 est composé de l'addition des contributions de chacun des radionucléides mentionnés ci-dessus.

Dans ce cas, le calculateur 8 met en œuvre une méthode de déconvolution prédéterminée, par exemple un algorithme dit MLEM (de l'anglais « *Maximum Likelihood Expectation-Maximisation* », ou algorithme espérance-maximisation).

Plus précisément, le calculateur 8 détermine itérativement la composition de la source 4, à partir de spectres préenregistrés qui constituent chacun une réponse d'un ensemble donné, comprenant une fibre de détection 10 et l'organe de détection 14, à un radionucléide ou un mélange de radionucléides prédéterminé(s), et des spectres calculés. Les spectres préenregistrés font partie des données de calibration.

Plus précisément encore, le calculateur 8 résout, par calcul itératif, l'équation (1) suivante : Y = H x L (1)
où Y est un vecteur représentatif du spectre mesuré pour une fibre de détection quelconque donnée ;
H est une matrice comprenant les spectres préenregistrés pour ladite fibre de détection ;
L est un vecteur de composition, représentatif de la composition de la source 4, chaque coefficient du vecteur de composition étant associée à un radionucléide, la valeur de chaque coefficient du vecteur de composition étant, par exemple, égale à la proportion du radionucléide correspondante dans la source 4 ; et
« x » est le produit matriciel.

Dans l'équation (1), le vecteur de composition L constitue l'inconnue à déterminer.

Par exemple, à partir des signaux de détection associés aux fibres de détection 10 comportant les gaines 18 les plus épaisses (c'est-à-dire les gaines 18 qui ne laissent que les particules β de haute énergie parvenir au cœur 16), certains radionucléides sont identifiés par les particules β de haute énergie qu'ils émettent. L'activité des radionucléides identifiés est alors déterminée.

Puis, l'identification de tels radionucléides émetteurs de particules β de haute énergie est mise à profit pour déterminer, à partir des signaux de détection associés aux fibres de détection 10 comportant les gaines 18 d'épaisseur plus faible, les radionucléides restants, qui sont des radionucléides émetteurs de particules β de plus faible énergie, ainsi que leur activité.

Le vecteur de composition L est ainsi déterminé.

Bien évidemment, pour l'obtention de la composition de la source 4 à partir des données de calibration et des signaux de détection, le calculateur 8 peut également être apte à mettre en œuvre toute autre méthode de calcul connue de l'homme du métier.

Dans ce deuxième exemple, dans lequel les spectres préenregistrés ont été simulés pour quatre radionucléides uniquement, à savoir ¹⁴C, ⁹⁰Sr, ⁹⁰Y, ²¹⁰Bi, le calculateur 8 obtient un vecteur de composition L valant (1 ; 1 ; 1 ; 1) par la mise en œuvre de l'algorithme MLEM.

L'aptitude du dispositif d'analyse 2 à identifier la composition de la source 4 a été évaluée au moyen du test de Kolmogorov-Smirnov, tout autre test de comparaison de jeux de données connu de l'homme du métier pouvant être mis en œuvre.

Plus précisément, le test de Kolmogorov-Smirnov, connu de l'homme du métier, a été mis en œuvre pour déterminer l'adéquation entre des spectres reconstruits à partir du vecteur de composition calculé, et les spectres calculés à partir des signaux de détection issus de l'étage de détection 6.

Pour ce faire, les sommes cumulées normalisées du spectre mesuré simulé (c'est-à-dire le vecteur Y) et du spectre reconstruit au moyen de l'algorithme MLEM (vecteur H x L) ont été soustraites l'une de l'autre, et un facteur de Kolmogorov-Smirnov a été établi, égal à la plus grande différence obtenue par la soustraction précédente. Plus ce facteur tend vers 0, plus les courbes sont similaires en forme.

Le nombre d'itérations pour l'algorithme MLEM vaut 500 et le facteur de Kolmogorov-Smirnov vaut 3,3×10⁻⁷. Il s'agit donc d'un excellent accord entre les valeurs attendues et les valeurs obtenues.

En variante, l'organe de détection 14 est directement connecté à une extrémité de chaque fibre de détection 10. Dans ce cas, l'étage de détection 6 est dépourvu de fibre de transport.

En variante, chaque fibre de détection 10 est associée à deux photodétecteurs 15 respectifs, chacun connecté à une extrémité respective de ladite fibre de détection 10. Dans ce cas, le calculateur 8 est configuré pour détecter une position, le long d'une fibre de détection 10 donnée, d'une interaction d'une particule β avec le cœur 16 de ladite fibre de détection 10. Plus précisément, le calculateur 8 est configuré pour détecter ladite position par l'identification, à partir du signal de détection issu de chaque photodétecteur 15 agencé à une extrémité respective de ladite fibre de détection 10, d'un instant de réception, par chaque photodétecteur 15, des photons générés par ladite interaction dans le cœur 16 de ladite fibre de détection 10. La détermination de ladite position est réalisée, par le calculateur 8, par la méthode dite « de calcul de temps de vol ».

En variante, l'étage de détection comprend, en outre, au moins deux fibres de détection 10 identiques. Une telle caractéristique a pour effet avantageux d'améliorer la statistique de la mesure. Dans ce cas, les fibres de détection 10 identiques sont connectées en entrée d'un même photodétecteur 15 de l'organe de détection 14.

En variante, au moins une fibre de détection 10 comprend, en outre, une enveloppe de protection entourant la gaine 18. Dans ce cas, la fonction de filtre passe-haut de la fibre de détection 10 est définie par la somme des contributions de sa gaine 18 et de ladite enveloppe de protection.

## Revendications

1. Dispositif (2) d'analyse de rayonnement β **caractérisé en ce qu'**il comprend un étage de détection (6) comportant une pluralité de fibres scintillantes (10) formant chacune une fibre de détection, et un organe de détection (14),
chaque fibre de détection (10) comprenant un cœur (16) et une gaine (18) agencée autour du cœur (16), le cœur (16) étant réalisé dans un matériau comprenant au moins un fluorophore apte à générer des photons lors de l'absorption par le cœur (16) d'un rayonnement β (5) incident issu d'une source (4), la gaine (18) étant réalisée dans un matériau ne comportant pas de fluorophore apte à générer de photons en cas d'absorption par la gaine (18) du rayonnement β (5) incident,
chaque fibre de détection (10) étant configurée pour transporter, vers au moins une de ses extrémités (20), tout ou partie des photons générés au sein de son cœur (16),
au moins deux fibres de détection (10) présentant des épaisseurs de gaine différentes et/ou des diamètres de cœur (16) différents,
l'organe de détection (14) étant raccordé à une extrémité de chaque fibre de détection (10) pour recevoir tout ou partie des photons transportés par la fibre de détection (10), et étant configuré pour générer, pour chaque fibre de détection (10), un signal de détection représentatif de la détection des photons reçus depuis la fibre de détection (10).

2. Dispositif d'analyse (2) selon la revendication 1, comportant, en outre, un calculateur (8) connecté en sortie de l'étage de détection (6) pour recevoir chaque signal de détection généré,
le calculateur (8) étant configuré pour stocker des données de calibration relatives à une réponse de l'étage de détection (6) à un rayonnement β incident,
le calculateur (8) étant, en outre, configuré pour déterminer, à partir des données de calibration et de tout ou partie des signaux de détection reçus, des informations relatives à la source (4).

3. Dispositif d'analyse (2) selon la revendication 1 ou 2, dans lequel le cœur (16) de chaque fibre de détection (10) est réalisé dans un matériau organique.

4. Dispositif d'analyse (2) selon l'une quelconque des revendications 1 à 3, dans lequel le cœur (16) de chaque fibre de détection (10) présente un diamètre inférieur ou égal à 1 mm, de préférence inférieur ou égal à 500 µm, par exemple inférieur ou égal à 300 µm.

5. Dispositif d'analyse (2) selon l'une quelconque des revendications 1 à 4, dans lequel la gaine (18) de chaque fibre de détection (10) présente une épaisseur supérieure ou égale à 5 µm, de préférence supérieure ou égale à 7,5 µm.

6. Dispositif d'analyse (2) selon l'une quelconque des revendications 1 à 5, dans lequel la pluralité de fibres de détection (10) est solidaire d'une surface d'un support souple, chaque fibre de détection (10) étant au contact de la surface du support, chaque fibre de détection (10) étant déformable.

7. Dispositif d'analyse (2) selon l'une quelconque des revendications 2 à 6, dans lequel l'organe de détection (14) comprend, pour chaque fibre de détection (10) deux photodétecteurs (15), chacun connecté à une extrémité (20) respective de la fibre de détection (10),
le calculateur (8) étant, en outre, configuré pour détecter une position, le long d'une fibre de détection (10) donnée, d'une interaction d'une particule β avec le cœur (16) de la fibre de détection (10) par la mise en œuvre d'une méthode de calcul de temps de vol à partir du signal de détection délivré par chacun des deux photodétecteurs (15) correspondants.

8. Procédé d'analyse d'un rayonnement (5) issu d'une source (4), le procédé comprenant les étapes :
- exposition des fibres de détection (10) du dispositif de détection selon l'une quelconque des revendications 1 à 7 au rayonnement (5) issu de la source (4) ;
- détermination d'informations relatives à la source (4) à partir des données de calibration préenregistrées, relatives à une réponse de l'étage de détection (6) à un rayonnement β incident, et de tout ou partie des signaux de détection délivrés par l'étage de détection (6) lors de l'étape d'exposition.

9. Procédé d'analyse selon la revendication 8, dans lequel la détermination est réalisée au moyen d'un algorithme espérance-maximisation, MLEM.
